# EUROPÄISCHE PATENTSCHRIFT

(11) **EP 0 762 010 B1**
(45) Veröffentlichungstag und Bekanntmachung des Hinweises auf die Patenterteilung: **17.05.2000**
(21) Anmeldenummer: 95115841.9
(22) Anmeldetag: 07.10.1995
(51) Int. Cl.: F16F 1/36, B05B 11/00

(54) **Schraubendruckfeder**
Helical compression spring
Ressort de compression hélicoidal

(30) Priorität: 12.09.1995 DE 29514644 U
(43) Veröffentlichungstag der Anmeldung: 12.03.1997
(73) Patentinhaber: Piepenstock, Friedhelm, 99842 Ruhla (DE); Piepenstock, Peter, 99842 Ruhla (DE); Piepenstock, Reiner, 99842 Ruhla (DE)
(72) Erfinder: Piepenstock, Friedhelm, D-99842 Ruhla (DE)
(74) Vertreter: Hassler, Werner, Dr.

(56) Entgegenhaltungen:
- EP-A- 0 492 363
- EP-A- 0 505 900
- EP-A- 0 560 060
- WO-A-95/01226
- DE-U- 8 713 891
- GB-A- 2 179 406
- US-A- 5 303 867

## Beschreibung

Die Erfindung betrifft eine als Thermoplastformteil ausgebildete Schraubendruckfeder mit einem ventilsitzseitigen Endbund und einem betätigungsseitigen Endbund.

Anwendungsgebiet einer solchen Schraubendruckfeder sind Pumpen für hygienische und kosmetische Zubereitungen, wie Pumpsprays.

Bei der Betätigung eines Kolbens wird die Schraubendruckfeder gespannt und die Zubereitung wird ausgepreßt bzw. versprüht. Dadurch wird ein in dem ventilseitigen Endbund gehaltenes Ventilverschlußglied auf den Ventilsitz gepreßt, um einen Rückfluß der Zubereitung zu verhindern. Das Ventilverschlußglied ist normalerweise eine Stahlkugel. Auch bei Verwendung von Edelstahlkugeln ist Korrosion durch die stark basischen Zubereitungen nicht auszuschließen. Insbesondere kann es zu Verfärbungen kommen.

Aufgabe der Erfindung ist die Bereitstellung einer Schraubendruckfeder mit einem ungehindert beweglichen Ventilverschlußglied bei korrosionsfester Ausbildung.

Diese Aufgabe wird nach der Erfindung dadurch gelöst, daß der ventilsitzseitige Endbund eine Ventilverschlußkappe aus einem Thermoplast aufnimmt, deren Stößel in axialer Richtung der Schraubendruckfebeweglich geführt ist.

Die Erfindung unterscheidet sich insofern vom Stand der Technik, als die Ventilverschlußkappe aus Thermoplast in der Schraubendruckfeder aufgenommen ist. Dieses erlaubt eine vereinfachte Herstellung und Montage der Pumpe. Die Ventilverschlußkappe ist absolut korrosionfest. Die Ventilverschlußkappe ist somit mit der Schraubendruckfeder recyclebar.

Eine sichere axiale Führung des Ventilverschlußgliedes wird dadurch erzielt, daß der Stößel durch einen Durchgang des ventilsitzseitigen Endbundes hindurchreicht.

Eine vereinfachte Montage ist dadurch sichergestellt, daß zur unverlierbaren Halterung der Ventilverschlußkappe radial gerichtete Stege in axiale Führungsschlitze des ventilsitzseitigen Endbundes eingreifen.

Die Herstellung in einem Spritzgießtakt wird dadurch ermögllicht, daß die Ventilverschlußkappe mit der Schraubendruckfeder einstückig durch Spritzgießen geformt und beim Entformen abgetrennt ist.

Ein Ausführungsbeispiel der Erfindung wird anhand der Zeichnung erläutert, in der darstellen:

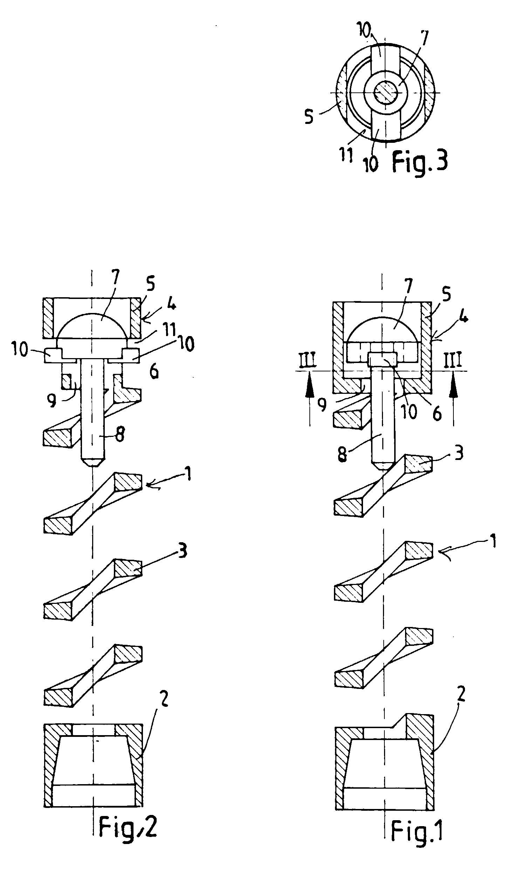

Fig. 1 eine teilweise geschnittene Schraubendruckfeder,
Fig. 2 einen Schnitt zu Fig. 1 und
Fig. 3 einen Schnitt nach der Linie III-III in Fig. 1.

Die Schraubendruckfeder 1 ist ein Thermoplast form teil, das durch Spritzgießen hergestellt ist. Die Schraubendruckfeder 1 umfaßt einen betätigungsseitigen Endbund 2, einen Schraubengang 3 und einen ventilsitzseitigen napfförmigen Endbund 4 mit einer Ringwand 5 und einem Napfboden 6. In den betätigungsseitigen Endbund 2 greift ein nicht dargestellter Kolben oder Kolbenansatz der Pumpe ein.

Der ventilsitzseitige Endbund 2 wirkt mit einem Ventilsitz an einem Austrittsstutzen des Vorratsbehälters zusammen. Als Ventilverschlußglied für den Ventilsitz ist eine Ventilverschlußkappe 7 mit einem Stößel 8 vorgesehen. Der Stößel 8 ragt durch einen Durchgang 9 des Napfbodens 8 hindurch und in den Hohlkern der Schraubendruckfeder 1 hinein.

An der Ventilverschlußkappe 7 sind vorzugsweise zwei einander diametral gegenüberstehende, radiale Stege 10 angeformt, die in axiale FührungssSchlitze 11 der Ringwand 5 hineinragen. Dadurch ist das Ventilverschlußglied unverlierbar jedoch leichtgängig in dem Endbund 4 gehalten und geführt.

Das Ventilverschlußglied ist mit der Schraubendruckfeder 1 in einem Spritzgießtakt einstückig geformt. Beim Entformen erfolgt die Trennung des Angusses für das Ventilverschlußglied, so daß dasselbe dann in der dargestellten Ausrichtung frei beweglich in dem Endbund 4 gehalten ist.

Die gesamte Schraubendruckfeder 1 mit Ventilverschlußglied besteht aus einen thermoplastischen Kunststoff. Dieser ist korrosionsfest gegen kosmetische und hygienische Zubereitungen aller Art, so daß dieselben problemfrei gehandhabt werden können. Die Schraubendruckfeder bzw. die gesamte Pumpe ist in vollem Umfang recyclierbar, da das Ventilverschlußglied aus dem gleichen Werkstoff wie die Schraubendruckfeder besteht.

Die Ventilverschlußkappe schließt infolge ihrer freien axialen Beweglichkeit mit der Betätigung des Kolbens sogleich den Ventilsitz ab. Dadurch wird die Funktionsfähigkeit der Pumpe verbessert.

## Patentansprüche

1. Als Thermoplastformteil ausgebildete Schraubendruckfeder mit einem ventilsitzseitigen Endbund und einem betätigungsseitigen Endbund, dadurch gekennzeichnet, daß der ventilsitzseitige Endbund (4) eine Ventilverschlußkappe (5) aus einem Thermoplast aufnimmt, deren Stößel (8) in axialer Richtung der Schraubendruckfeder (1) beweglich geführt ist.

2. Schraubendruckfeder nach Anspruch 1, dadurch gekennzeichnet, daß der Stößel (8) durch einen Durchgang (9) des ventilsitzseitigen Endbundes (4) hindurchreicht.

3. Schraubendruckfeder nach Anspruch 2, dadurch gekennzeichnet, daß der Durchgang (9) im Napfboden (6) des Endbundes (4) vorgesehen ist.

4. Schraubendruckfeder nach einem der Ansprüche 1 bis 3, dadurch gekennzeichnet, daß zur unverlierbaren Halterung der Ventilverschlußkappe (7) radial gerichtete Stege (10) in axiale Führungsschlitze (11) des ventilsitzseitigen Endbundes (4) eingreifen.

5. Schraubendruckfeder nach einem der Ansprüche 1 bis 4, dadurch gekennzeichnet, daß die Ventilverschlußkappe (7) mit der Schraubendruckfeder (1) einstückig durch Spritzgießen geformt und beim Entformen abgetrennt ist.

## Claims

1. A helical compression spring designed as a thermoplastic molding and having an end collar on the valve-seat side and an end collar on the actuating side, wherein the end collar (4) on the valve-seat side accommodates a valve closure cap (5) which is made of a thermoplastic material and whose tappet (8) is guided so as to be movable in the axial direction of the helical compression spring (1).

2. The helical compression spring as claimed in claim 1, wherein the tappet (8) passes through an opening (9) in the end collar (4) on the valve-seat side.

3. The helical compression spring as claimed in claim 2, wherein the opening (9) is provided in the cup base (6) of the end collar (4).

4. The helical compression spring as claimed in one of the claims 1 to 3, wherein, for captive retention of the valve closure cap (7), radially directed webs (10) engage in axial guide slots (11) of the end collar (4) on the valve-seat side.

5. The helical compression spring as claimed in one of the claims 1 to 4, wherein the valve closure cap (7) is integrally molded with the helical compression spring (1) by injection molding and is detached during demolding.

## Revendications

1. Ressort hélicoïdal de compression configuré comme pièce en thermoplastique moulé, présentant un collet d'extrémité situé du côté d'un siège de vanne et un collet d'extrémité situé du côté actionnement, caractérisé en ce que le collet d'extrémité (4) situé du côté du siège de vanne reçoit un bonnet (5) de fermeture de vanne en thermoplastique, dont le pointeau (8) est guidé de manière à pouvoir se déplacer dans la direction axiale du ressort hélicoïdal de compression (1).

2. Ressort hélicoïdal de compression selon la revendication 1, caractérisé en ce que le pointeau (8) traverse un passage (9) du collet d'extrémité (4) situé du côté du siège de vanne.

3. Ressort hélicoïdal de compression selon la revendication 2, caractérisé en ce que le passage (9) ou est prévu dans le fond (6) de la cuvette du collet d'extrémité (4).

4. Ressort hélicoïdal de compression selon l'une des revendications 1 à 3, caractérisé en ce que pour permettre le maintien définitif du bonnet (7) de fermeture de vanne, des traverses (10) orientées radialement s'engagent dans des fentes axiales de guidage (11) du collet d'extrémité (4) situé du côté du siège de vanne.

5. Ressort hélicoïdal de compression selon l'une des revendications à 4, caractérisé en ce que le bonnet (7) de fermeture de vanne est formé d'une seule pièce avec le ressort hélicoïdal de compression (1) par moulage par injection, et en est séparé lors du démoulage.
